# EUROPEAN PATENT APPLICATION

(11) **EP 4 693 890 A1**
(43) Date of publication of application: **11.02.2026**
(21) Application number: 24790807.2
(22) Date of filing: 25.07.2024
(51) Int. Cl.: H02S 20/30

(54) **BRIDGE BRACKET MECHANISM**

(30) Priority: 13.06.2024 CN 202421340778 U
(71) Applicant: Arctech Solar Holding Co., Ltd., Kunshan Suzhou, Jiangsu 215331 (CN)
(72) Inventor: LIU, Haijun, Suzhou, Jiangsu 215331 (CN); YANG, Ying, Suzhou, Jiangsu 215331 (CN); QIU, Ping, Suzhou, Jiangsu 215331 (CN); ZHU, Zetao, Suzhou, Jiangsu 215331 (CN)
(74) Representative: Michalski Hüttermann & Partner Patentanwälte mbB
(86) International application number: PCT/CN2024/107533
(87) International publication number: WO 2025/255913

(57) **Abstract**

A bridge mechanism, suitable for connecting two adjacent photovoltaic brackets, includes two sets of bridge assemblies arranged oppositely. Each set of bridge assemblies includes two sets of hinge rods, a telescopic rod and an adapter. The two sets of hinge rods are respectively adapted to be hingedly arranged on the two adjacent photovoltaic brackets. Two ends of telescopic rod are respectively connected to end portions of the two sets of hinge rods away from hinge ends. The adapter includes a rotation connection structure and an angle adjustment structure. The hinge rod is fixedly connected to the adapter through the rotation connection structure, and/or the telescopic rod is fixedly connected to the adapter through the angle adjustment structure. The bridge mechanism has a simple structure and is easy to install, and can be adaptable to the level difference and height difference between the adjacent photovoltaic brackets.

## Description

### CROSS-REFERENCE TO RELATED APPLICATION

The present invention claims priority of a Chinese Patent Application No. 202421340778.2, filed on June 13, 2024 and titled "BRIDGE MECHANISM", the entire content of which is incorporated herein by reference.

### TECHNICAL FIELD

This application relates to the technical field of photovoltaic systems, in particular to a bridge mechanism.

### BACKGROUND

In most usage scenarios of bridge mechanisms, there will be height differences and level differences due to terrain or different types of photovoltaic brackets. The bridge mechanism in the existing technology generally use traditional universal joints, which are relatively expensive.

Therefore, it is necessary to provide a new bridge mechanism to solve the above problem.

### SUMMARY

An object of the present application is to provide a bridge mechanism which is adaptable to the level difference and height difference between adjacent photovoltaic brackets.

In order to achieve the above object, the present application adopts the following technical solutions:
a bridge mechanism, suitable for connecting two adjacent photovoltaic brackets, the bridge mechanism including two sets of bridge assemblies arranged oppositely, each set of bridge assemblies including:
two sets of hinge rods, the two sets of hinge rods being respectively adapted to be hingedly arranged on the two adjacent photovoltaic brackets; the two sets of hinge rods being parallel to each other;
a telescopic rod, two ends of telescopic rod being respectively connected to end portions of the two sets of hinge rods away from hinge ends;
an adapter, the hinge rod and the telescopic rod being connected through the adapter; the adapter including a rotation connection structure and an angle adjustment structure; the hinge rod being fixedly connected to the adapter through the rotation connection structure, and/or the telescopic rod being fixedly connected to the adapter through the angle adjustment structure.

As a technical solution for further improvement of this application, the adapter includes a first plate wall arranged in a height direction; the angle adjustment structure is provided on the first plate wall; after a climbing angle of the telescopic rod is adjusted through the angle adjustment structure, the telescopic rod is tightly connected to the adapter.

As a technical solution for further improvement of this application, the angle adjustment structure includes a first circular hole, a first arc hole and a fastener; the telescopic rod is pivotally connected to the adapter through a first pin which passes through the first circular hole; the telescopic rod is tightly connected to the adapter through the fastener which passes through the first arc hole.

As a technical solution for further improvement of this application, the hinge rod is pivotally connected to the adapter through a second pin; and the first pin is perpendicular to the second pin.

As a technical solution for further improvement of this application, the adapter includes a second plate wall arranged in a horizontal direction; the rotation connection structure is provided on the second plate wall; after a misalignment angle of the hinge rod is adjusted through the rotation connection structure, the hinge rod and the adapter are tightly connected.

As a technical solution for further improvement of this application, the rotation connection structure includes a second circular hole, a second arc hole and another fastener; the hinge rod is pivotally connected to the adapter through a second pin which passes through the second circular hole; the hinge rod is tightly connected to the adapter through the another fastener which passes through the second arc hole; and the first pin is perpendicular to the second pin.

As a technical solution for further improvement of this application, the adapter includes a second plate wall arranged in a horizontal direction; the rotation connection structure is provided on the second plate wall; after a misalignment angle of the hinge rod is adjusted through the rotation connection structure, the hinge rod and the adapter are tightly connected.

As a technical solution for further improvement of this application, the rotation connection structure includes a second circular hole, a second arc hole and a fastener; the hinge rod is pivotally connected to the adapter through a second pin which passes through the second circular hole; the hinge rod is tightly connected to the adapter through the fastener which passes through the second arc hole.

As a technical solution for further improvement of this application, the telescopic rod is pivotally connected to the adapter through a first pin; and the first pin is perpendicular to the second pin.

As a technical solution for further improvement of this application, the telescopic rod is located laterally outside the two sets of hinge rods; the end portion of the hinge rod is connected to a side of the telescopic rod through the adapter.

As a technical solution for further improvement of this application, the bridge mechanism further includes a limiting plate which is fixed on the photovoltaic bracket and defines a limiting groove; the hinge rod is installed on the limiting plate and is at least partially located in the limiting groove.

As a technical solution for further improvement of this application, the telescopic rod includes a first sleeve and a second sleeve, and the second sleeve is at least partially sleeved within the first sleeve.

Compared with the prior art, the beneficial effect of the bridge mechanism of the present application is that the hinge rods are provided on adjacent photovoltaic brackets. The telescopic rod connects the hinge rods on two sides and can be telescopically adjusted to connect the hinge rods with different spacing to adapt to the distance difference between the adjacent photovoltaic brackets. The hinge rod and the telescopic rod are connected through the adapter. The adapter includes the rotation connection structure and the angle adjustment structure. The hinge rod relative to the adapter can be rotated and adjusted in a horizontal plane through the rotation connection structure to complete a misalignment angle and then fixed to adapt to the level difference between the adjacent photovoltaic brackets. The telescopic rod relative to the adapter can be rotated and adjusted in a vertical plane through the angle adjustment structure to complete a climbing angle and then fixed to adapt to the height difference between the adjacent photovoltaic brackets. The bridge mechanism ensures that the cleaning robot can pass through, while simplifying the structure and reducing costs. Therefore, it can adapt to various complex terrains and is easy to install.

### BRIEF DESCRIPTION OF DRAWINGS

FIG. 1 is a schematic perspective structural view of a bridge mechanism according to a specific embodiment of the present application;
FIG. 2 is an enlarged structural view of area A in FIG. 1;
FIG. 3 is an enlarged structural view of area B in FIG. 1;
FIG. 4 is a schematic structural view of the bridge mechanism applied to a photovoltaic bracket according to a specific embodiment of the present application;
FIG. 5 is an enlarged structural view of area C in FIG. 4;
FIG. 6 is an enlarged structural view of area D in FIG. 4;
FIG. 7 is a schematic structural view of an adapter according to a specific embodiment of the present application;
FIG. 8 is another schematic structural view of the adapter according to a specific embodiment of the present application;
FIG. 9 is yet another schematic structural view of the adapter according to a specific embodiment of the present application;
FIG. 10 is a schematic view of an assembly of a telescopic rod and the adapter according to a specific embodiment of the present application;
FIG. 11 is a schematic structural view of the telescopic rod according to a specific embodiment of the present application;
FIG. 12 is another schematic structural view of the telescopic rod according to a specific embodiment of the present application;
FIG. 13 is yet another schematic structural view of the telescopic rod according to a specific embodiment of the present application;
FIG. 14 is a schematic view of photovoltaic brackets with a height difference according to a specific embodiment of the present application;
FIG. 15 is a schematic view of photovoltaic brackets with a level difference according to a specific embodiment of the present application.

### DETAILED DESCRIPTION

Exemplary embodiments of the present application will be described in detail below with reference to the accompanying drawings. If there are several specific embodiments, features of these embodiments may be combined with each other provided there is no conflict. When the description refers to the drawings, the same numbers in different drawings refer to the same or similar elements, unless otherwise stated. The following description of exemplary embodiments does not represent all embodiments consistent with the present application. Rather, they are merely examples of devices, products and/or methods consistent with aspects of the present application as recited in the claims of the present application.

The terminologies used in the present application are only for the purpose of describing specific embodiments, and are not intended to limit the protection scope of the present application. The singular forms "a", "said", and "the" used in the specification and claims of the present application are also intended to include plural forms unless the context clearly indicates other meanings.

It should be understood that the terms "first", "second" and similar words used in the specification and claims of the present application do not represent any order, quantity or importance, but are only used to distinguish different components. Similarly, "an" or "a" and other similar words do not mean a quantity limit, but mean that there is at least one. Unless otherwise noted, "front", "rear", "top", "bottom" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present disclosure includes two or more.

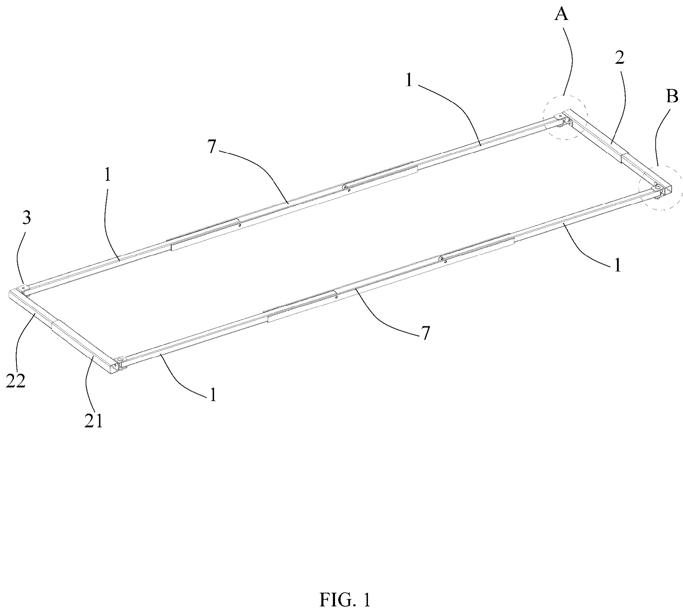

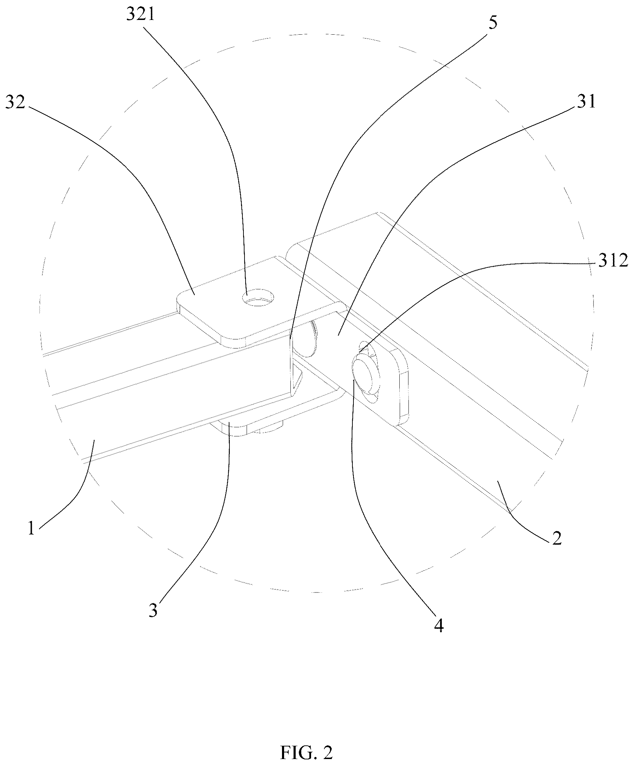

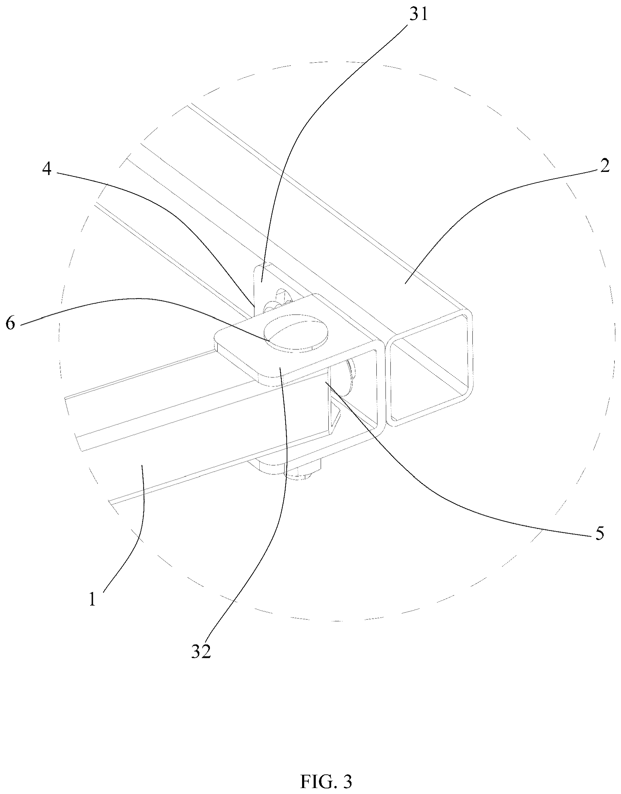

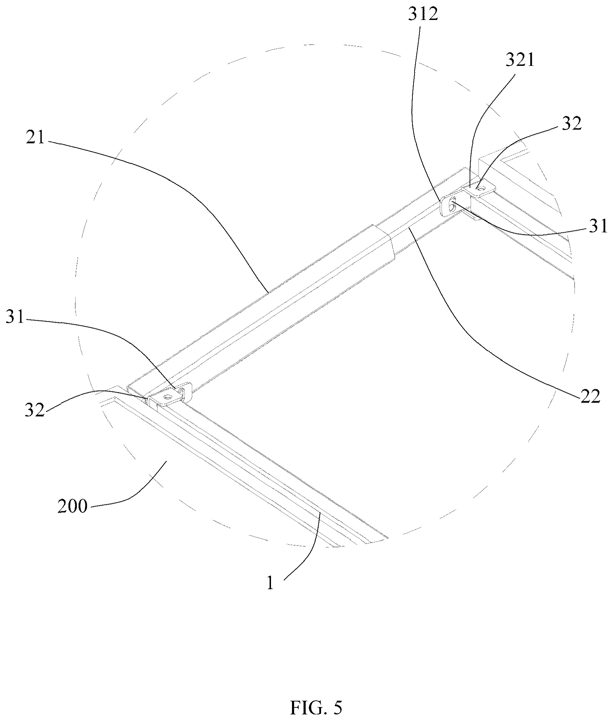

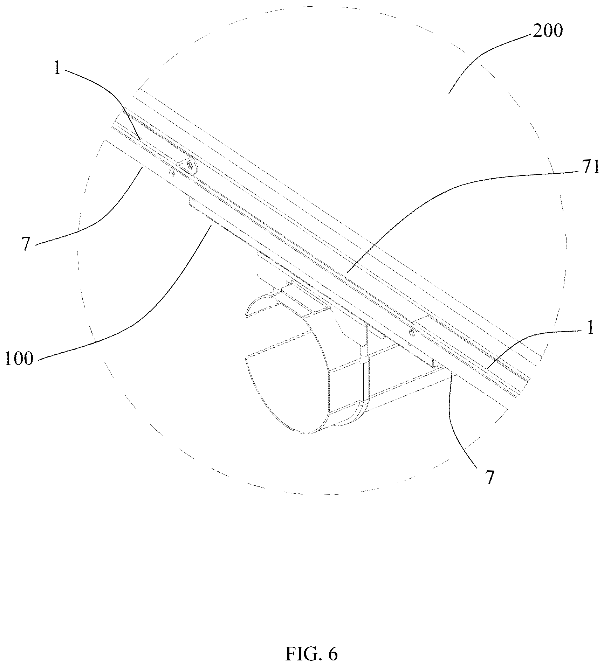

Referring to FIG. 1 to FIG. 15, this embodiment discloses a bridge mechanism suitable for connecting two adjacent photovoltaic brackets, so that a cleaning robot can walk from one photovoltaic module 200 to an adjacent photovoltaic module 200 with a larger distance. Moreover, for photovoltaic systems located in complex terrain, the bridge mechanism can be adapted to connect two adjacent photovoltaic brackets having height and level differences.

Referring to FIG.1 to FIG. 4, the bridge mechanism includes two sets of bridge assemblies arranged oppositely. Each set of bridge assemblies includes a hinge rod 1, a telescopic rod 2 and an adapter 3. The two sets of hinge rods 1 of the two sets of bridge assemblies are respectively adapted to be hingedly arranged on two adjacent photovoltaic brackets, and the two sets of hinge rods 1 are parallel to each other. Two ends of the telescopic rod 2 are respectively connected to end portions of the two sets of hinge rods 1 away from hinge ends. The hinge rod 1 and the telescopic rod 2 are connected through the adapter 3. The adapter 3 includes a rotation connection structure and an angle adjustment structure. The hinge rod 1 is fixedly connected to the adapter 3 through the rotational connection structure, and/or the telescopic rod 2 is fixedly connected to the adapter 3 through the angle adjustment structure. Furthermore, the telescopic rod 2 is located laterally outside the two sets of hinge rods 1. The end portion of the hinge rod 1 is connected to a side of the telescopic rod 2 through the adapter 3.

The adapter 3 includes a first plate wall 31 arranged in a height direction; the angle adjustment structure is provided on the first plate wall 31; after the telescopic rod 2 adjusts a climbing angle through the angle adjustment structure, the telescopic rod 2 and the adapter 3 are tightly connected to adapt to a height difference between adjacent photovoltaic brackets; and/or, the adapter 3 includes a second plate wall 32 arranged in a horizontal direction; the rotation connection structure is provided on the second plate wall 32; after the hinge rod 1 is adjusted through the rotation connection structure to complete a misalignment angle, the hinge rod 1 and the adapter 3 are tightly connected to adapt to a level difference between adjacent photovoltaic brackets.

Referring to FIG. 1 to FIG. 5 and FIG. 7, in one embodiment of the present application, the adapter 3 includes the first plate wall 31 and the second plate wall 32. Two second plate walls 32 are provided and extend perpendicularly in a same direction from two sides of the first plate wall 31. The first plate wall 31 is connected to the telescopic rod 2, and the second plate walls 32 are connected to the hinge rod 1. The angle adjustment structure includes a first circular hole 311, a first arc hole 312 and a fastener 4. The first circular hole 311 is closer to an end of the telescopic rod 2 than the first arc hole 312. The telescopic rod 2 is pivotally connected to the adapter 3 through a first pin 5 which passes through the first circular hole 311. The telescopic rod 2 is tightly connected to the adapter 3 through the fastener 4 which passes through the first arc hole 312. After the telescopic rod 2 and the adapter 3 rotate around the first pin 5 to adjust the climbing angle, the fastener 4 passes through the first arc hole 312 and the telescopic rod 2 to tightly connect the telescopic rod 2 and the adapter 3, so as to fix the telescopic rod 2 and the adapter 3. This not only facilitates angle adjustment, but also prevents it from rotating due to external force during use and affecting the stable connection of the bridge mechanism. The rotation connection structure includes a second circular hole 321; the hinge rod 1 is pivotally connected to the adapter 3 through a second pin 6 which passes through the second circular hole 321; the hinge rod 1 and the adapter 3 are rotatable around the second pin 6 to adjust the misalignment angle; the second pin 6 is perpendicular to the first pin 5. Or, the hinge rod 1 is fastened to the adapter 3 through the fastener 4 which passes through the second circular hole 321; after the hinge rod 1 and the adapter 3 first adjust the misalignment angle, the hinge rod 1 is tightly connected to the adapter 3 through the fastener 4 which passes through the second circular hole 321. The first pin 5 and the second pin 6 can also be fasteners, as long as they can pass through corresponding circular holes to connect the adapter 3 to the telescopic rod 2 or to the hinge rod 1.

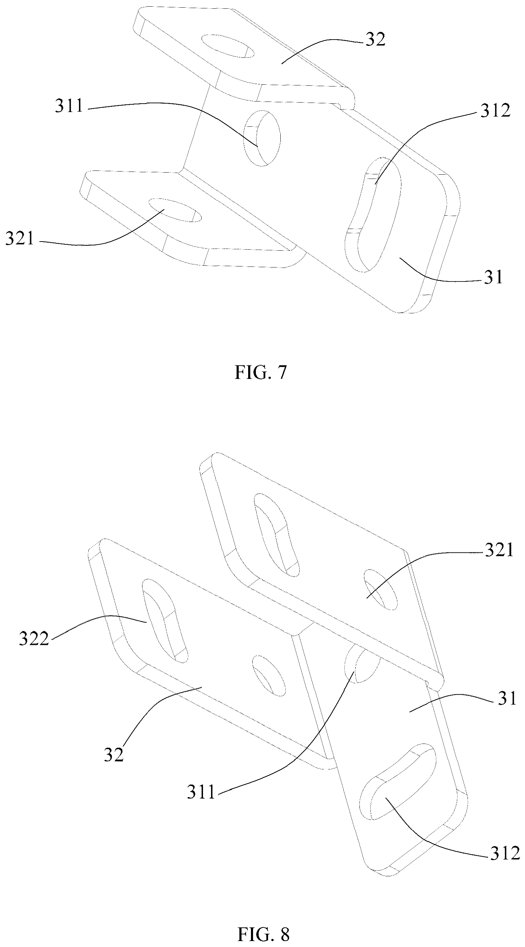

Referring to FIG. 8, in another embodiment of the present application, the adapter 3 includes a first plate wall 31 and a second plate wall 32. The angle adjustment structure includes a first circular hole 311, a first arc hole 312 and a fastener 4. The first circular hole 311 is closer to an end of the telescopic rod 2 than the first arc hole 312. The telescopic rod 2 is pivotally connected to the adapter 3 through the first pin 5 which passes through the first circular hole 311. The telescopic rod 2 is tightly connected to the adapter 3 through the fastener 4 which passes through the first arc hole 312. After the telescopic rod 2 and the adapter 3 rotate around the first pin 5 to adjust the climbing angle, the fastener 4 passes through the first arc hole 312 and the telescopic rod 2 to tightly connect the telescopic rod 2 and the adapter 3, so as to fix the telescopic rod 2 and the adapter 3. This not only facilitates angle adjustment, but also prevents it from rotating due to external force during use and affecting the stable connection of the bridge mechanism. The rotation connection structure includes a second circular hole 321, a second arc hole 322 and a fastener 4. The second circular hole 321 is closer to the end of the hinge rod 1 than the second arc hole 322. The hinge rod 1 is pivotally connected to the adapter 3 through the second pin 6 which passes through the second circular hole 321. The hinge rod 1 is tightly connected to the adapter 3 through the fastener 4 which passes through the second arc hole 312. After the hinge rod 1 and the adapter 3 rotate around the second pin 6 to adjust the misalignment angle, the fastener 4 passes through the second arc hole 322 and the hinge rod 1 to tightly connect the hinge rod 1 and the adapter 3. The second pin 6 is perpendicular to the first pin 5 to fix the hinge rod 1 and the adapter 3. This not only facilitates angle adjustment, but also prevents it from rotating due to external force during use and affecting the stable connection of the bridge mechanism.

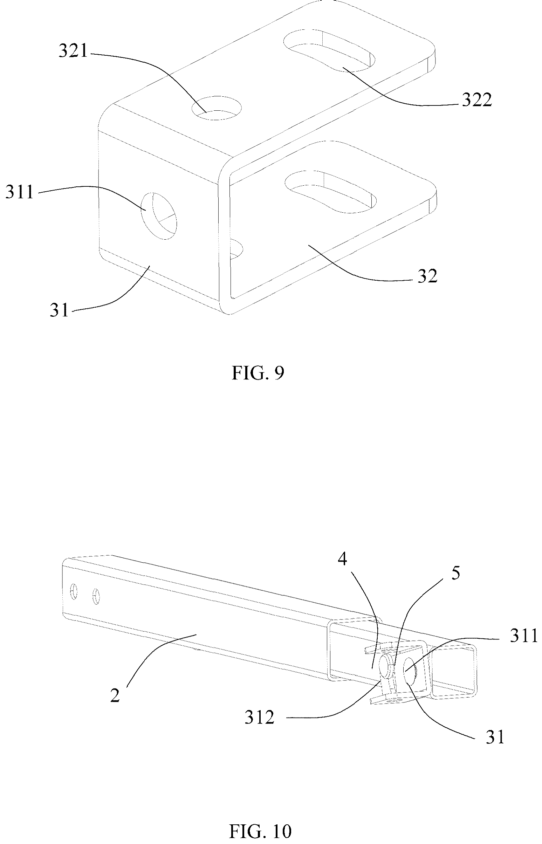

Referring to FIG. 9, in yet another embodiment of the present application, the adapter 3 includes a first plate wall 31 and a second plate wall 32. The angle adjustment structure includes a first circular hole 311; the telescopic rod 2 is pivotally connected to the adapter 3 through a first pin 5 which passes through the first circular hole 311; the telescopic rod 2 and the adapter 3 rotate around the first pin 5 to adjust the climbing angle; the first pin 5 is perpendicular to the second pin 6; or, the telescopic rod 2 is tightly connected to the adapter 3 through the fastener 4 which passes through the first circular hole 311. After the telescopic rod 2 and the adapter 3 first adjust the climbing angle, the telescopic rod 2 is tightly connected to the adapter 3 through the fastener 4 which passes through the first circular hole 311. The rotation connection structure includes a second circular hole 321, a second arc hole 322 and a fastener 4. The second circular hole 321 is closer to the end of the hinge rod 1 than the second arc hole 322. The hinge rod 1 is pivotally connected to the adapter 3 through the second pin 6 which passes through the second circular hole 321. The hinge rod 1 is tightly connected to the adapter 3 through the fastener 4 which passes through the second arc hole 312. After the hinge rod 1 and the adapter 3 rotate around the second pin 6 to adjust the misalignment angle, the fastener 4 passes through the second arc hole 322 and the hinge rod 1 to tightly connect the hinge rod 1 and the adapter 3 so as to fix the hinge rod 1 and the adapter 3. This not only facilitates angle adjustment, but also prevents it from rotating due to external forces during use and affecting the stable connection of the bridge mechanism.

Referring to FIG. 1, FIG. 4, FIG. 5, FIG. 10 to FIG. 13, the telescopic rod 2 includes a first sleeve 21 and a second sleeve 22. The second sleeve 22 is at least partially sleeved in the first sleeve 21. The first sleeve 21 and the second sleeve 22 can be axially translated to each other to adjust the length of the telescopic rod 2.

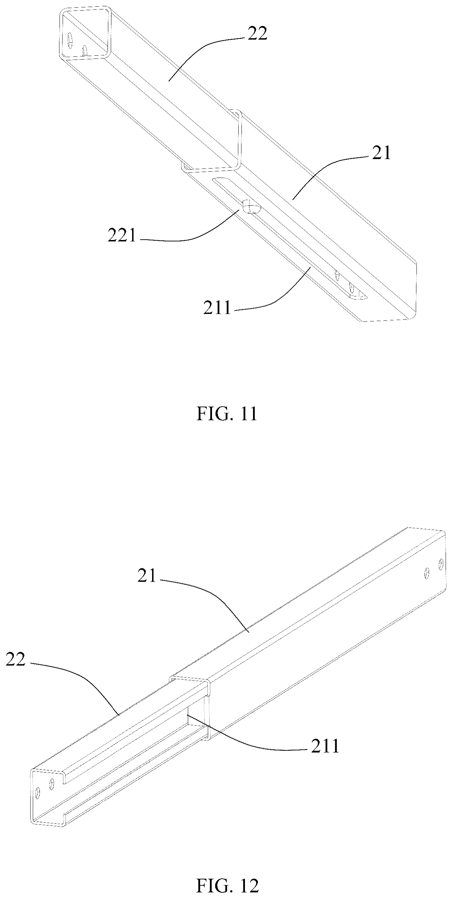

In one embodiment of the present application, referring to FIG. 11, both the first sleeve 21 and the second sleeve 22 are square tubes. An elongated hole 211 is formed on a wall of the first sleeve 21 along its length direction. The second sleeve 22 is provided with a fixed top bead 221 correspondingly. The second sleeve 22 can drive the top bead 221 to translate along the elongated hole 211. Moreover, the top bead 221 at least partially protrudes outside the first sleeve 21. The arrangement of the top bead 221 can limit an elongation length of the telescopic rod 2, that is, limit the relative longest length of the first sleeve 21 and the second sleeve 22 to prevent the two from being separated from each other.

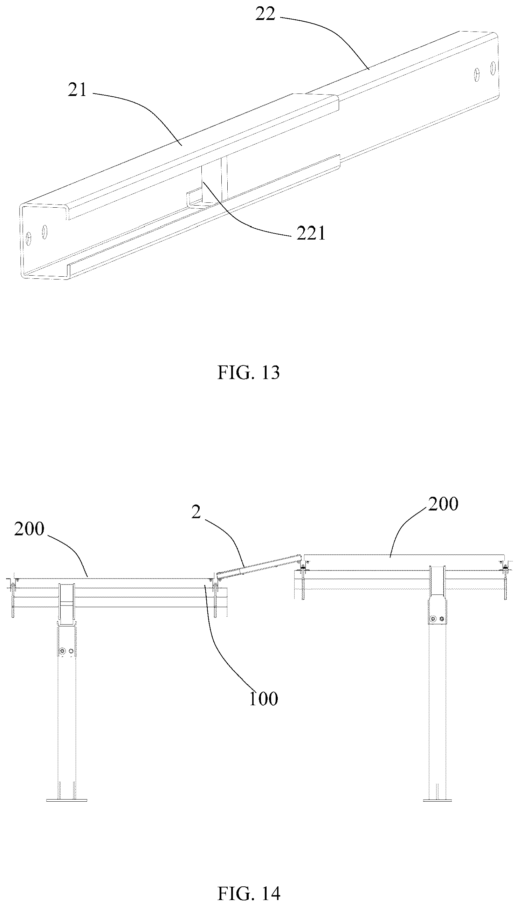

In another embodiment of the present application, referring to FIG. 12 and FIG. 13, both the first sleeve 21 and the second sleeve 22 are C-shaped rods, and their openings are arranged in opposite directions. A first baffle 212 is provided inside the first sleeve 21. A second baffle 222 is provided inside the second sleeve 22. In an axial direction of the telescopic rod 2, a projection of the first baffle 212 and a projection of the second baffle 222 at least partially coincide. Furthermore, the first baffle 212 is provided at one end of the first sleeve 21 adjacent to the second sleeve 22 along its length direction. The second baffle 222 is provided at one end of the second sleeve 22 adjacent to the first sleeve 21 along its length direction. In this way, when the telescopic rod 2 is extended, the first baffle 212 and the second baffle 222 approach each other until they abut against each other, which prevents the telescopic rod 2 from continuing to extend and causing the first sleeve 21 and the second sleeve 22 to separate.

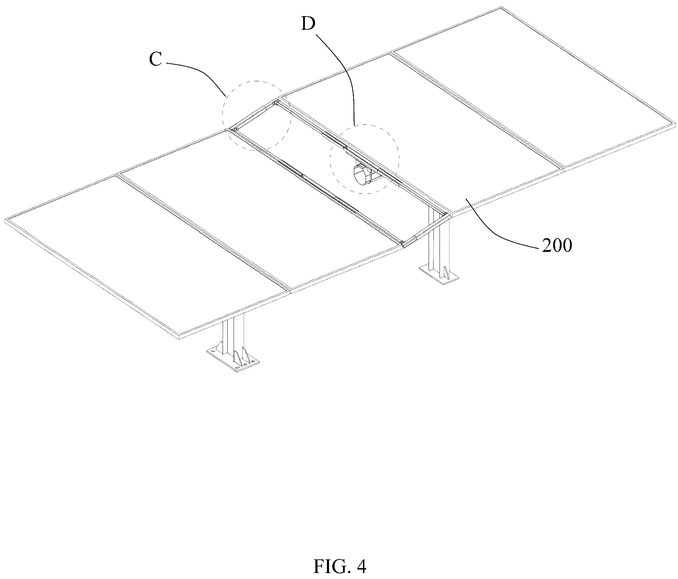

Referring to FIG. 1 and FIG. 4, the bridge mechanism of this embodiment further includes a limiting plate 7. The limiting plate 7 is fixed on a purlin 100 of the photovoltaic bracket and has a limiting groove 71. The hinge rod 1 is installed on the limiting plate 7 and is at least partially located in the limiting groove 71. Furthermore, an inner width of the limiting groove 71 is equivalent to an outer width of the hinge rod 1. A length of the limiting plate 7 is shorter than a length of the photovoltaic module 200. In this embodiment, one limiting plate 7 is equipped with two hinge rods 1 corresponding to each other, and the two hinge rods 1 are respectively connected to the telescopic rods 2 on two sides to form a passage for the cleaning robot to pass. The length of the two hinge rods 1 does not need to be equivalent to the length of the photovoltaic module 200, and only one end needs to be hinged with the limiting plate 7. The sum of the lengths of the two hinge rods 1 may be smaller than the length of the photovoltaic module 200. In this way, the use of raw materials of the hinge rod 1 can be reduced, the weight of the bridge mechanism can be reduced, and the cost can be reduced.

Referring to FIG. 4 to FIG. 6 and FIG. 14, a state where there is a height difference but no level difference between adjacent photovoltaic brackets is shown. At this time, no rotation occurs between the adapter 3 and the hinge rod 1. The first plate wall 31 is relatively vertical to the hinge rod 1. The two ends of the telescopic rod 2 rotate upward and downward respectively around the adapters 3 at two ends to adapt to the height difference.

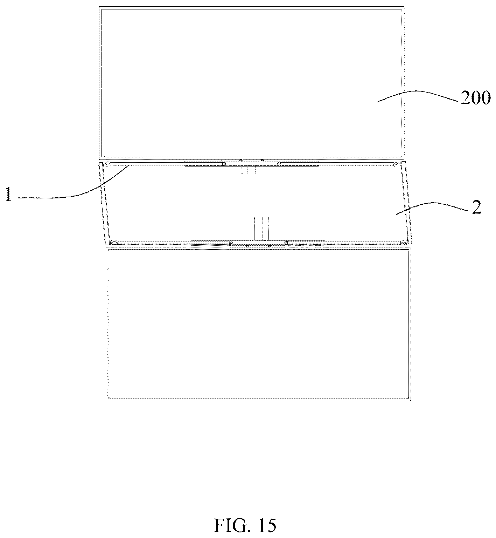

Referring to FIG. 15, a state where there is a level difference but no height difference between adjacent photovoltaic brackets is shown. At this time, the telescopic rod 2 is in a horizontal state. The hinge rod 1 connected at two ends of the single-sided telescopic rod 2 rotates inwardly and outwardly around the adapter 3 respectively to adapt to the level difference.

When installing the bridge mechanism of this embodiment, the hinge rod 1 and the telescopic rod 3 are rotatable around the adapter 3 respectively, and the rotation directions of the two are perpendicular to each other. That is, the former rotates to accommodate the level difference between adjacent photovoltaic brackets, and the latter rotates to accommodate the height difference between adjacent photovoltaic brackets. The bridge mechanism as a whole can be adapted to connect two photovoltaic brackets with the height difference and/or the level difference. When in use, the hinge rod 1, the telescopic rod 2 and the adapter 3 are locked and fixed. That is, after installing and adjusting the bridge mechanism, they are fixed as a whole, which prevents external environmental factors from causing interference and changing the adjusted length and angle, thereby avoiding affecting the passage of the cleaning robot.

In summary, compared with the existing technology, the bridge mechanism of the present application has the following advantages: the hinge rods 1 are provided on the purlin 100 of the adjacent photovoltaic brackets. The telescopic rods 2 connect the hinge rods 1 on two sides and can be telescopically adjusted to connect the hinge rods 1 with different spacing to adapt to the distance difference between the adjacent photovoltaic brackets. The hinge rod 1 and the telescopic rod 2 are connected through the adapter 3. The adapter 3 includes the rotation connection structure and the angle adjustment structure. The hinge rod 1 can be rotated and adjusted in a horizontal plane relative to the adapter 3 through the rotation connection structure to complete the misalignment angle and then be fixed to adapt to the level difference between the adjacent photovoltaic brackets. The telescopic rod 2 relative to the adapter 3 can be rotated and adjusted in a vertical plane through the angle adjustment structure to complete the climbing angle and then fixed, so as to adapt to the height difference between the adjacent photovoltaic brackets. The bridge mechanism ensures that the cleaning robot can pass through, while simplifying the structure and reducing costs. The bridge mechanism is adaptable to various complex terrains and is easy to install.

The above embodiments are only used to illustrate the present application and do not limit the technical solutions described in the present application. The understanding of this description should be based on those skilled in the art. Although the present application has been described in detail with reference to the above-mentioned embodiments, it is understandable to those skilled in the art that those skilled in the art can still make modifications or equivalent substitutions to the present application. All technical solutions and improvements that do not depart from the spirit and scope of the present application shall be covered by the claims of the present application.

## Claims

1. A bridge mechanism, suitable for connecting two adjacent photovoltaic brackets, the bridge mechanism comprising two sets of bridge assemblies arranged oppositely, each set of bridge assemblies comprising:
two sets of hinge rods (1), the two sets of hinge rods (1) being respectively adapted to be hingedly arranged on the two adjacent photovoltaic brackets; the two sets of hinge rods (1) being parallel to each other;
a telescopic rod (2), two ends of telescopic rod (2) being respectively connected to end portions of the two sets of hinge rods (1) away from hinge ends;
an adapter (3), the hinge rod (1) and the telescopic rod (2) being connected through the adapter (3); the adapter (3) comprising a rotation connection structure and an angle adjustment structure; the hinge rod (1) being fixedly connected to the adapter (3) through the rotation connection structure, and/or the telescopic rod (2) being fixedly connected to the adapter (3) through the angle adjustment structure.

2. The bridge mechanism according to claim 1, wherein the adapter (3) comprises a first plate wall (31) arranged in a height direction; the angle adjustment structure is provided on the first plate wall (31); after a climbing angle of the telescopic rod (2) is adjusted through the angle adjustment structure, the telescopic rod (2) is tightly connected to the adapter (3).

3. The bridge mechanism according to claim 2, wherein the angle adjustment structure comprises a first circular hole (311), a first arc hole (312) and a fastener (4); the telescopic rod (2) is pivotally connected to the adapter (3) through a first pin (5) which passes through the first circular hole (311); the telescopic rod (2) is tightly connected to the adapter (3) through the fastener (4) which passes through the first arc hole (312).

4. The bridge mechanism according to claim 3, wherein the hinge rod (1) is pivotally connected to the adapter (3) through a second pin (6); and the first pin (5) is perpendicular to the second pin (6).

5. The bridge mechanism according to claim 3, wherein the adapter (3) comprises a second plate wall (32) arranged in a horizontal direction; the rotation connection structure is provided on the second plate wall (32); after a misalignment angle of the hinge rod (1) is adjusted through the rotation connection structure, the hinge rod (1) and the adapter (3) are tightly connected.

6. The bridge mechanism according to claim 5, wherein the rotation connection structure comprises a second circular hole (321), a second arc hole (322) and another fastener (4); the hinge rod (1) is pivotally connected to the adapter (3) through a second pin (6) which passes through the second circular hole (321); the hinge rod (1) is tightly connected to the adapter (3) through the another fastener (4) which passes through the second arc hole (322); and the first pin (5) is perpendicular to the second pin (6).

7. The bridge mechanism according to claim 1, wherein the adapter (3) comprises a second plate wall (32) arranged in a horizontal direction; the rotation connection structure is provided on the second plate wall (32); after a misalignment angle of the hinge rod (1) is adjusted through the rotation connection structure, the hinge rod (1) and the adapter (3) are tightly connected.

8. The bridge mechanism according to claim 7, wherein the rotation connection structure comprises a second circular hole (321), a second arc hole (322) and a fastener (4); the hinge rod (1) is pivotally connected to the adapter (3) through a second pin (6) which passes through the second circular hole (321); the hinge rod (1) is tightly connected to the adapter (3) through the fastener (4) which passes through the second arc hole (322).

9. The bridge mechanism according to claim 8, wherein the telescopic rod (2) is pivotally connected to the adapter (3) through a first pin (5); and the first pin (5) is perpendicular to the second pin (6).

10. The bridge mechanism according to claim 1, wherein the telescopic rod (2) is located laterally outside the two sets of hinge rods (1); the end portion of the hinge rod (1) is connected to a side of the telescopic rod (2) through the adapter (3).

11. The bridge mechanism according to claim 1, wherein the bridge mechanism further comprises a limiting plate (7) which is fixed on the photovoltaic bracket and defines a limiting groove (71); the hinge rod (1) is installed on the limiting plate (7) and is at least partially located in the limiting groove (71).

12. The bridge mechanism according to claim 1, wherein the telescopic rod (2) comprises a first sleeve (21) and a second sleeve (22), and the second sleeve (22) is at least partially sleeved within the first sleeve (21).
